# EUROPEAN PATENT SPECIFICATION

(11) **EP 3 842 646 B1**
(45) Date of publication and mention of the grant of the patent: **24.04.2024**
(21) Application number: 20217273.0
(22) Date of filing: 24.12.2020
(51) Int. Cl.: F16B 13/12, F16B 13/00

(54) **EXPANSION DOWEL**
SPREIZDÜBEL
CHEVILLE À EXPANSION

(30) Priority: 24.12.2019 IT 201900025540
(43) Date of publication of application: 30.06.2021
(73) Proprietor: G&B Fissaggi S.R.L., 10029 Villastellone (TO) (IT)
(72) Inventor: ANTONINI, Andrea, 10029 VILLASTELLONE (TO) (IT)
(74) Representative: Robba, Pierpaolo

(56) References cited:
- EP-A2- 2 119 920
- WO-A1-2016/015821

## Description

### Technical Field of the Invention

The invention relates to an expansion dowel.

More particularly, the invention relates to an expansion dowel of the type used for fixing a screw to a wall.

### Prior Art

Expansion dowels adapted to be inserted into a hole obtained in a wall (for example by means of a drill) in order to fix a screw to the wall are known and widespread.

Generally, said expansion dowels comprise a deformable tubular body in which a longitudinal through-opening is provided, capable of receiving a screw; when the screw is inserted into said through-opening, the screw radially deforms the tubular body of the dowel, with resulting increase in the dowel section, thus causing locking of the dowel inside the wall.

According to prior art, expansion dowels are usually made entirely of a homogeneous plastic material, characterized by a low rigidity, so as to ensure sufficient deformability and flexibility of the tubular body of the dowel.

However, it has been found that while, on one part, making the tubular body of the dowel entirely of a plastic material with low rigidity ensures good radial expansion and good anchoring to the wall, on the other part it may prevent proper and firm coupling of the screw to said tubular body of the dowel.

As a result, besides gradually detaching from the dowel, the screw is no longer capable of properly and completely retracting the head portion of the tubular body of the dowel towards its collar, thus causing incomplete and ineffective anchoring of the dowel in the wall.

In order to overcome this drawback, expansion dowels have been proposed comprising a substantially tubular body made of a plastic material with low rigidity, to which additional elements are attached, made of a plastic material with a rigidity remarkably higher than that of the tubular body of the dowel.

The high rigidity of the plastic material of these additional elements brings about formation of an inner thread when the screw threads itself into the dowel, this inner thread having high resistance to the stresses to which the dowel itself is exposed during expansion. Such resistance allows tightening of the screw, upon completion of the anchoring, with a tightening torque higher than that of known anchoring systems.

An expansion dowel of the type described above is shown, for example, in document EP 2 119 920.

While, on one part, this kind of solution allows to improve coupling of the screw to the dowel in comparison with dowels formed by a homogeneous body entirely made of a plastic material with low rigidity, on the other part they exhibit drawbacks in terms of anchoring of the dowel to the wall.

Indeed, the provision of the additional rigid elements improves the expansion and sealing of the dowel in a single direction, namely along the diameter perpendicular to the diameter at whose ends said inserts are provided.

This causes limited anchoring of the dowel to the wall, especially in case of walls made of partially perforated or hollow materials.

Document WO 2016/015821 describes an expansion dowel that is made of at least two different plastic materials and comprises a main body made of a first plastic material in which an expansion region is defined. The expansion dowel further comprises a sleeve which is arranged in front of the expansion region of the main body in the direction of insertion of a screw or the like and can expand in the radial direction. The sleeve is formed by two parts connected to each other by at least one elastic connector and is at least partially recessed in a housing made of the second plastic material.

Although the structure of the described expansion dowel can have improved expansion characteristics, the dowel proves poorly robust also outside of the expansion region, and especially at the back end of the dowel.

It is an object of the present invention to overcome the aforesaid limitations, by providing an expansion dowel that is robust and capable of ensuring satisfactory anchoring thereof to any type of support.

In particular, an object of the present invention is to provide an expansion dowel that is capable of ensuring satisfactory anchoring both to solid supports and to partially perforated supports and hollow supports.

This and other objects are achieved with an expansion dowel as claimed in the appended claims.

### Summary of the Invention

The expansion dowel according to the invention comprises a tubular body made of a plastic material having a first resistance to deformation and comprising, at the expansion region, at least one pair of longitudinal sections diametrically opposite to each other and separated by corresponding longitudinal openings, these longitudinal openings also being diametrically opposite to each other. Said longitudinal opening are through-openings.

The longitudinal sections, diametrically opposite to each other, of the dowel body alternate with corresponding longitudinal inserts made of a plastic material having a second resistance to deformation, said longitudinal inserts therefore also being diametrically opposite to each other.

In this way, at the expansion region, the lateral surface of the dowel has longitudinal inserts diametrically opposite two by two and alternating with longitudinal sections diametrically opposite two by two of the dowel body.

According to the invention, the expansion dowel can pass from a first, non-deformed configuration, in which the diametrically opposite longitudinal inserts are mutually parallel and the diametrically opposite longitudinal body sections are mutually parallel, to a second, deformed configuration, in which the diametrically opposite longitudinal inserts move away from each other at their middle portion and the diametrically opposite longitudinal body sections move away from each other at their middle portion.

In other words, said longitudinal sections of said body form first expansion sectors diametrically opposite to each other and said longitudinal inserts form second expansion sectors diametrically opposite to each other.

According to a preferred embodiment of the invention, the expansion dowel comprises a single pair of longitudinal inserts, whereby the lateral surface of the dowel has two longitudinal insets (second expansion sectors) arranged at opposite ends of a first diameter and alternating with two longitudinal body sections (first expansion sectors) arranged at opposite ends of a second diameter which is substantially perpendicular to said first diameter.

According to this embodiment, the expansion dowel expands and becomes deformed along two directions that are substantially perpendicular to each other and correspond to the direction of said first diameter and the direction of said second diameter, respectively. In a preferred embodiment of the invention, the tubular body of the expansion dowel has a first, high resistance to deformation, whereas the longitudinal inserts have a second, low resistance to deformation.

A more or less high resistance to deformation can be obtained by properly selecting the materials used, the thicknesses and more generally the geometries of the different elements, etc., as will be apparent to the person skilled in the art.

According to this embodiment, in order to control the deformation of said longitudinal inserts, one or more weakening zones are provided in each of said inserts.

Preferably, each insert comprises a single weakening zone, at the middle portion thereof. Said weakening zones can be made, for example, as through-holes.

Preferably, weakening zones are also provided in each of the longitudinal sections of the tubular body of the dowel, in order to control deformation thereof.

In an alternative embodiment of the invention, the tubular body of the expansion dowel has a first, low resistance to deformation, whereas the longitudinal inserts have a second, high resistance to deformation.

In this case, too, a more or less high resistance to deformation can be obtained by properly selecting the materials used, the thicknesses and more generally the geometries of the different elements, etc., as will be apparent to the person skilled in the art.

According to this embodiment, the one or more weakening zones are provided in each of the longitudinal sections of the tubular body of the dowel, in order to control the deformation of said longitudinal sections.

Preferably, each longitudinal section comprises a single weakening zone, at the middle portion thereof.

Preferably, weakening zones are also provided in each of the longitudinal inserts, in order to control deformation thereof.

Said weakening zones can be made, for example, as through-holes.

By using an expansion dowel comprising a body made of a material with a first resistance to deformation and provided with inserts made of a material with a second resistance to deformation, said first and second resistance to deformation can be chosen each time in such a way as to obtain the desired characteristics.

Said first and second resistance to deformation may possibly be equal, but are preferably different.

Advantageously, the fact of having regions (the longitudinal inserts or the longitudinal sections of the body) with higher resistance to deformation allows to obtain a satisfactory coupling of the screw to the dowel.

On the other hand, the fact that both the regions with higher resistance to deformation and the regions with lower resistance to deformation become deformed in a controlled manner upon insertion of the screw - thus ensuring deformation of the dowel in two directions substantially perpendicular to each other - ensures improved anchoring to the support (for example, a wall) in which the dowel is inserted.

In particular, thanks to the features set forth above, the expansion dowel according to the invention ensures satisfactory anchoring to solid, perforated or hollow supports.

### Brief Description of Drawings

Further features and advantages of the invention will become more evident from the following detailed description of a preferred embodiment thereof, given by way of non-limiting example, with reference to the attached drawings, in which:
Figure 1 is a perspective view of an expansion dowel according to the invention;
Figure 2 is a lateral view of the expansion dowel of Figure 1.

### Detailed Description of an Embodiment of the Invention

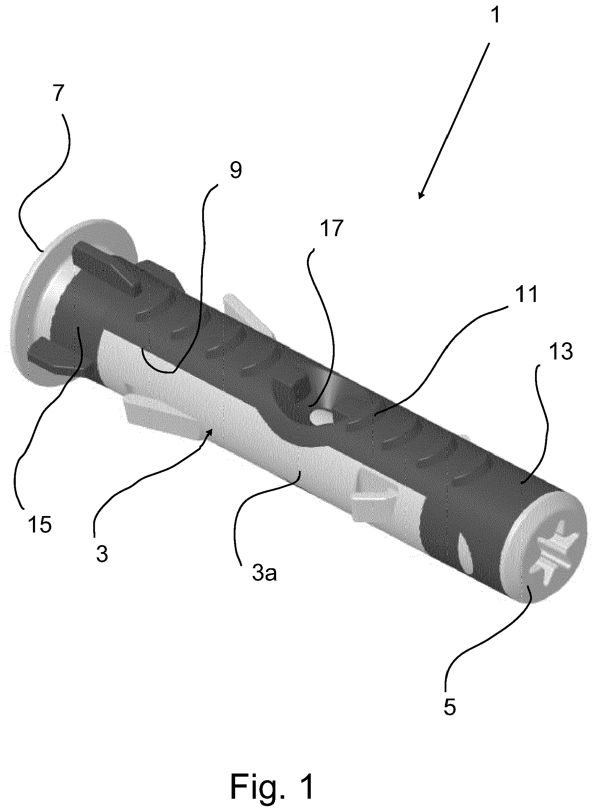

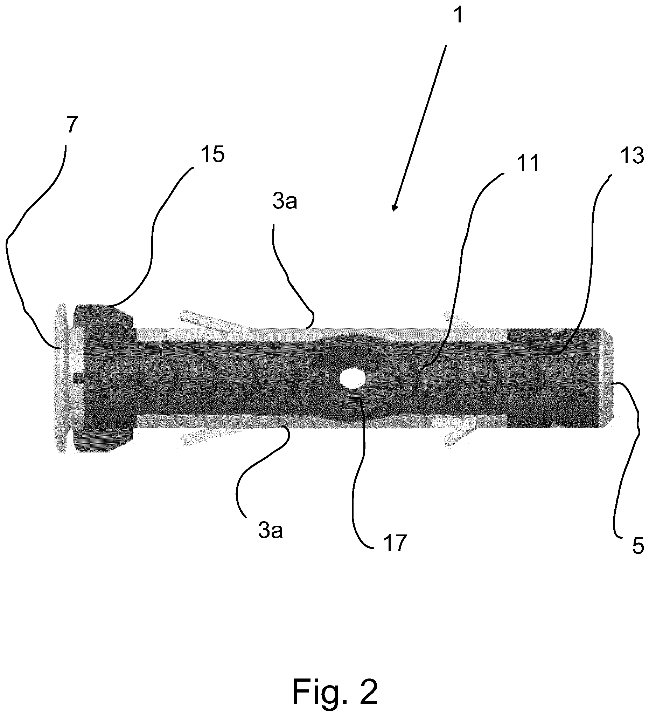

Referring to Figures 1 and 2, there is schematically illustrated an expansion dowel 1 according to the invention.

Said expansion dowel 1 comprises a substantially cylindrical longitudinal channel: the expansion dowel 1 is adapted to be inserted into a hole drilled in a support and to receive within its channel a screw or similar fastening element.

Said expansion dowel 1 comprises a tubular body 3 ending, at a first end thereof, with a head 5 and, at the second, opposite end thereof, with a flange 7 adapted to abut against the support, along the edges of the hole in which the dowel 1 is inserted. An expansion region is defined between said head 5 and said flange 7, and in said expansion region the body comprises a pair of longitudinal sections 3a diametrically opposite to each other and separated from each other by corresponding longitudinal openings 9 diametrically opposite to each other. Said longitudinal openings 9 are through-openings.

The longitudinal sections 3a of the body alternate with respective longitudinal inserts 11 received in said longitudinal openings 9.

According to the invention, said longitudinal inserts 11 are connected, at a first end thereof close to the head 5 of the body 3, to a first annular collar 13, and, at a second, opposite end close to the flange 7 of the body 3, to a second annular collar 15.

Compared to a dowel of known type and of the type described, for example, in WO 2016/015821, which has poor resistance outside the expansion region, the provision of the first and second annular collars 13, 15 provide the dowel according to the invention with more robustness at opposite ends of the expansion region.

At the expansion region, the lateral surface of the dowel is therefore formed by the pair of inserts 11, arranged at opposite ends of a first diameter of the cross-section of the body 3, alternating with a pair of longitudinal sections 3a of the body 3, located at opposite ends of a pair of longitudinal sections 3a of the body 3 located at opposite ends of a second diameter of the cross-section of said body 3, said second diameter being substantially perpendicular to said first diameter.

Preferably, the longitudinal sections 3a of the body 3 and the longitudinal inserts 11 are dimensioned so as to form a substantially continuous lateral surface of the dowel.

Preferably, the diametrically opposite longitudinal sections 3a of the body 3 have substantially the same extension and the diametrically opposite longitudinal inserts 11, too, have substantially the same extension. Even more preferably, the diametrically opposite longitudinal sections 3a of the body 3 have substantially the same extension as the diametrically opposite longitudinal inserts 11.

In the illustrated embodiment, the longitudinal sections 3a of the body 3 and the longitudinal inserts 11 will all have an extension of about 90°.

According to the invention, the tubular body 3 (and, accordingly, its longitudinal sections 3a) is made of a plastic material having a first resistance to deformation and the longitudinal inserts 11 (as well as the first and second collars 13, 15) are made of a plastic material having a second resistance to deformation.

Preferably, said first and said second resistance to deformation are different.

In particular, in the embodiment illustrated in the Figures, the body 3 (and, accordingly, its longitudinal sections 3a) is made of a plastic material having a high first resistance to deformation and the longitudinal inserts 11 (as well as the first and second collars 13, 15) are made of a plastic material having a low second resistance to deformation.

Thanks to the provision of the longitudinal sections 3a of the tubular body 3 made of a material with high resistance to deformation, it is possible to ensure an effective coupling between the expansion dowel 1 according to the invention and a screw penetrating into the longitudinal channel thereof.

According to the invention, the expansion dowel 1 can pass from a first, non-deformed configuration, in which the longitudinal sections 3a of the body 3 are substantially parallel to each other and the longitudinal inserts 11, too, are substantially parallel to each other, to a second, deformed configuration, in which the longitudinal sections 3a of the body 3 move away from each other at their middle portion and the longitudinal inserts 11 also move away from each other at their middle portion.

In other words, the longitudinal sections 3a of the body 3 form first longitudinal expansion sectors diametrically opposite to each other and the longitudinal inserts 11 form second expansion sectors also diametrically opposite to each other, and in said deformed configuration the dowel 1 expands along two directions substantially perpendicular to each other and corresponding to the direction of the first diameter and the direction of the second diameter of the cross-section of the dowel, respectively.

Compared to a dowel of known type and of the type described, for example, in EP 2 119 920, which comprises additional elements made of a material with high rigidity and received in recesses of a tubular body with low rigidity, the fact that the dowel according to the invention comprises longitudinal sections of the body that alternate with longitudinal inserts received in corresponding longitudinal through-openings has a clear advantage. Indeed, in the expansion region the first expansion sectors formed by the longitudinal sections of the body and the second expansion sectors formed by the longitudinal inserts are in no way constrained to one another, whereby the expansion of the first and second expansion sectors takes place independently, without one hindering the other.

In particular, in the illustrated embodiment, the longitudinal sections 3a of the body and the longitudinal inserts 11 will effectively expand along the first diameter and along the second diameter of the cross-section of the dowel, respectively.

In order to allow controlled deformation of the longitudinal sections 3a of the tubular body 3 made of a material with high resistance to deformation, one or more weakening zones are formed in said longitudinal sections.

Said weakening zones may be formed, for example, by means of a localized reduction in the thickness of the walls of said longitudinal sections 3a.

In a particularly preferred embodiment of the invention, further weakening zones 17 will be provided also in the longitudinal inserts 11, in order for said longitudinal inserts to be deformed in a controlled manner.

In the illustrated embodiment, said weakening zones are made as through-holes 17, particularly as a single through-hole 17 at the middle portion of the corresponding longitudinal insert.

It will be evident that said weakening zones might also be made in any other way within the reach of the person skilled in the art.

It will also be evident to the person skilled in the art that said weakening zones might be provided in a different number and/or in different positions.

Advantageously, by appropriately arranging and dimensioning the weakening zones it will be possible to control the deformation of the longitudinal sections 3a of the body 3 and of the longitudinal inserts 11, thus obtaining the desired behavior.

Thanks to the fact that the dowel 1 can expand along two directions substantially perpendicular to each other, effective anchoring of the dowel to any type of support can be ensured.

In particular, it will be possible to obtain effective anchoring of the dowel 1 to solid supports as well as to perforated or hollow supports.

As a result, the expansion dowel 1 according to the invention allows to achieve the object set forth above.

Obviously, the description of the preferred embodiment provided herein is to be understood merely as a non-limiting example and several modifications and variants within the reach of the person skilled in the art are possible without thereby departing from the scope of the invention as defined by the appended claims.

For example, although in the illustrated embodiment reference has been made to a dowel comprising a single pair of longitudinal inserts, it is evident that several pairs of diametrically opposite longitudinal inserts might be provided.

In addition, although in the illustrated embodiment reference has been made to a dowel comprising longitudinal inserts having a resistance to deformation lower than that of the tubular body, it is evident that it will also be possible to provide a dowel with a tubular body having a resistance to deformation lower than that of the longitudinal inserts.

## Claims

1. Expansion dowel (1), comprising a tubular body (3) made of a plastic material having a first resistance to deformation, said tubular body (3) comprising at least one pair of longitudinal sections (3a) diametrically opposite to each other and separated by longitudinal openings (9), which are correspondingly diametrically opposite to each other, wherein corresponding longitudinal inserts (11), made of a plastic material having a second resistance to deformation, are received in said longitudinal openings (9) and are correspondingly diametrically opposite to each other, wherein said expansion dowel (1) can pass from a first, non-deformed configuration, in which said diametrically opposite longitudinal inserts (11) are substantially mutually parallel and said diametrically opposite longitudinal body sections are substantially mutually parallel, to a second, deformed configuration, in which said diametrically opposite longitudinal inserts (11) move away from each other at their middle portion, and said diametrically opposite longitudinal body sections (3a) move away from each other at their middle portion, and wherein said body (3) at a first end thereof ends with a head (5) and at the second, opposite end thereof ends with a flange (7), and said longitudinal inserts (11) are connected, at a first end close to said head (5) of said tubular body, to a first annular collar (13) and, at a second, opposite end close to said flange (7) of said tubular body, to a second annular collar (15), **characterized in that** said longitudinal openings are through-openings (9) and diametrically opposite longitudinal sections (3a) of said body alternate with corresponding longitudinal inserts (11), whereby the lateral surface of said dowel is formed by longitudinal inserts (11) diametrically opposite two by two and alternating with longitudinal body sections (3a) diametrically opposite two by two and said longitudinal sections (3a) of said body form first expansion sectors diametrically opposite to each other and said longitudinal inserts (11) form second expansion sectors diametrically opposite to each other, in the expansion region said first expansion sectors formed by said longitudinal sections of the body and said second expansion sectors formed by said longitudinal inserts being in no way constrained to one another, whereby the expansion of said first and second expansion sectors takes place independently, without one hindering the other.

2. Expansion dowel (1) according to claim 1, wherein said dowel comprises a single pair of longitudinal inserts (11), arranged at opposite ends of a first diameter of the cross-section of said tubular body (3), and said tubular body (3) correspondingly comprises a single pair of longitudinal body sections (3a) arranged at opposite ends of a second diameter of the cross-section of said tubular body, said second diameter being substantially perpendicular to said first diameter.

3. Expansion dowel (1) according to claim 1 or 2, wherein said first resistance to deformation is higher than said second resistance to deformation.

4. Expansion dowel (1) according to claim 3, wherein one or more weakening zones (17) are provided in each of said longitudinal body sections (3a).

5. Expansion dowel (1) according to claim 3 or 4, wherein one or more further weakening zones are provided in each of said longitudinal inserts (11).

6. Expansion dowel (1) according to claim 1 or 2, wherein said second resistance to deformation is higher than said first resistance to deformation.

7. Expansion dowel (1) according to claim 6, wherein one or more weakening zones (17) are provided in each of said longitudinal inserts (11).

8. Expansion dowel (1) according to claim 6 or 7, wherein one or more further weakening zones are provided in each of said longitudinal body sections (3a).

9. Expansion dowel (1) according to any of claims 4, 5, 7 o 8, wherein said weakening zones and/or said further weakening zones are made as through holes (17).

10. Expansion dowel (1) according to any of claims 4, 5, 7 or 8, wherein said weakening zones and/or said further weakening zones are made in the form of localized thickness reductions.

## Patentansprüche

1. Spreizdübel (1) mit einem rohrförmigen Körper (3) aus einem Kunststoff, der einen ersten Verformungswiderstand hat, wobei der rohrförmige Körper (3) wenigstens ein Paar von longitudinalen Abschnitten (3a) aufweist, die sich diametral gegenüberliegen und durch longitudinale Öffnungen (9) getrennt sind, die einander entsprechend diametral gegenüber liegen, wobei entsprechende longitudinale Einsätze (11) aus einem Kunststoff, der einen zweiten Verformungswiderstand hat, in die longitudinalen Öffnungen (9) eingefügt sind und einander entsprechend diametral gegenüberliegen, wobei der Spreizdübel (1) aus einer ersten, nicht verformten Konfiguration, in der die sich diametral gegenüberliegenden longitudinalen Einsätze (11) im Wesentlichen parallel zueinander sind und die sich diametral gegenüberliegenden longitudinalen Körperabschnitte im Wesentlichen zueinander parallel sind, in eine zweite, deformierte Konfiguration übergehen kann, in der die sich diametral gegenüberliegenden longitudinalen Einsätze (11) an ihrem mittleren Abschnitt voneinander wegbewegen und die sich diametral gegenüberliegenden longitudinalen Körperabschnitte (3a) an ihrem mittleren Abschnitt voneinander wegbewegen, und wobei der Körper (3) an einem ersten Ende mit einem Kopf (5) endet und an einem zweiten, entgegengesetzten Ende mit einem Flansch (7) endet, und die longitudinalen Einsätze (11) an einem ersten Ende, das dem Kopf (5) des rohrförmigen Körpers zugewandt ist, mit einem ersten ringförmigen Kragen (13) verbunden sind und an einem zweiten, entgegensetzten Ende, das dem Flansch (7) des rohrförmigen Körpers zugewandt ist, mit einem zweiten ringförmigen Kragen (15) verbunden sind, **dadurch gekennzeichnet, dass** die longitudinalen Öffnungen durchgehende Öffnungen (9) sind und diametral gegenüberliegende longitudinale Abschnitte (3a) des Körpers mit entsprechenden longitudinalen Einsätzen (11) abwechseln, wodurch die Seitenfläche des Dübels von longitudinalen Einsätzen (11) gebildet ist, die sich diametral zwei zu zwei gegenüberliegen und mit longitudinalen Körperabschnitte (3a), die sich diametral gegenüberliegend zwei zu zwei angeordnet sind, abwechseln, und die longitudinalen Abschnitte (3a) des Körpers erste Spreizsektoren bilden, die sich diametral gegenüber liegen, und die longitudinalen Einsätze (11) zweite Spreizsektoren bilden, die sich diametral gegenüber liegen, wobei in dem Spreizbereich die ersten Spreizsektoren, die von den longitudinalen Abschnitten des Körpers gebildet werden, und die zweiten Spreizsektoren, die von den longitudinalen Einsätzen gebildet werden, in keiner Weise aneinander gebunden sind, wobei die Spreizung des ersten und des zweiten Spreizsektors unabhängig voneinander stattfinden, ohne einander zu behindern.

2. Spreizdübel nach Anspruch 1, wobei der Dübel ein einziges Paar longitudinaler Einsätze (11) aufweist, die an gegenüberliegenden Enden eines ersten Durchmessers des Querschnitts des rohrförmigen Körpers (3) angeordnet sind, und der rohrförmige Körper (3) entsprechend ein einziges Paar longitudinaler Körperabschnitte (3a) aufweist, die an gegenüberliegenden Enden eines zweiten Durchmessers des Querschnitts des rohrförmigen Körpers angeordnet sind, wobei der zweite Durchmesser im Wesentlichen senkrecht zu dem ersten Durchmesser ist.

3. Spreizdübel (1) nach Anspruch 1 oder 2, wobei der erste Verformungswiderstand größer als der zweite Verformungswiderstand ist.

4. Spreizdübel (1) nach Anspruch 3, wobei eine oder mehrere Schwachstellen (17) in jedem der longitudinalen Körperabschnitte (3a) vorgesehen sind.

5. Spreizdübel (1) nach Anspruch 3 oder 4, wobei eine oder mehrere Schwachstellen (17) in jedem der longitudinalen Einsätze (11) vorgesehen sind.

6. Spreizdübel (1) nach Anspruch 1 oder 2, wobei der zweite Verformungswiderstand größer als der erste Verformungswiderstand ist.

7. Spreizdübel (1) nach Anspruch 6, wobei eine oder mehrere Schwachstellen (17) in jedem der longitudinalen Einsätze (11) vorgesehen ist.

8. Spreizdübel (1) nach Anspruch 6 oder 7, wobei eine oder mehrere Schwachstellen in jedem der longitudinalen Körperabschnitte (3a) vorgesehen ist.

9. Spreizdübel (1) nach einem der Ansprüche 4, 5, 7 oder 8, wobei die Schwachstellen und/oder zusätzlichen Schwachstellen als durchgehende Löcher (17) ausgebildet sind.

10. Spreizdübel (1) nach einem der Ansprüche 4, 5, 7 oder 8, wobei die Schwachstellen und/oder weiteren Schwachstellen als lokale Verringerungen der Dicke ausgebildet sind.

## Revendications

1. - Cheville à expansion (1), comprenant un corps tubulaire (3) fait d'une matière plastique ayant une première résistance à la déformation, ledit corps tubulaire (3) comprenant au moins une paire de sections longitudinales (3a) diamétralement opposées l'une à l'autre et séparées par des ouvertures longitudinales (9), qui sont diamétralement opposées l'une à l'autre de manière correspondante, des inserts longitudinaux (11) correspondants, faits d'une matière plastique ayant une seconde résistance à la déformation, étant reçus dans lesdites ouvertures longitudinales (9) et étant diamétralement opposés l'un à l'autre de manière correspondante, ladite cheville à expansion (1) pouvant passer d'une première configuration, non déformée, dans laquelle lesdits inserts longitudinaux diamétralement opposés (11) sont sensiblement parallèles entre eux et lesdites sections de corps longitudinales diamétralement opposées sont sensiblement parallèles entre elles, à une seconde configuration, déformée, dans laquelle lesdits inserts longitudinaux diamétralement opposés (11) s'écartent l'un de l'autre à leur partie médiane, et lesdites sections de corps longitudinales diamétralement opposées (3a) s'écartent l'une de l'autre à leur partie médiane, et ledit corps (3) se terminant à une première extrémité de celui-ci par une tête (5) et à la seconde extrémité, opposée, de celui-ci, par une bride (7), et lesdits inserts longitudinaux (11) étant reliés, à une première extrémité proche de ladite tête (5) dudit corps tubulaire, à un premier collier annulaire (13) et, à une seconde extrémité, opposée, proche de ladite bride (7) dudit corps tubulaire, à un second collier annulaire (15), **caractérisée par le fait que** lesdites ouvertures longitudinales sont des ouvertures traversantes (9) et des sections longitudinales diamétralement opposées (3a) dudit corps s'alternent avec des inserts longitudinaux (11) correspondants, ce par quoi la surface latérale de ladite cheville est formée par des inserts longitudinaux (11) diamétralement opposés deux à deux et s'alternant avec des sections de corps longitudinales (3a) diamétralement opposées deux à deux, et lesdites sections longitudinales (3a) dudit corps forment des premiers secteurs d'expansion diamétralement opposés les uns aux autres et lesdits inserts longitudinaux (11) forment des seconds secteurs d'expansion diamétralement opposés les uns aux autres, dans la région d'expansion lesdits premiers secteurs d'expansion formés par lesdites sections longitudinales du corps et lesdits seconds secteurs d'expansion formés par lesdits inserts longitudinaux n'étant nullement contraints les uns par rapport aux autres, ce par quoi l'expansion desdits premiers et seconds secteurs d'expansion s'effectue de manière indépendante, sans que les uns n'entrave les autres.

2. - Cheville à expansion (1) selon la revendication 1, ladite cheville comprenant une seule paire d'inserts longitudinaux (11), disposés à des extrémités opposées d'un premier diamètre de la section transversale dudit corps tubulaire (3), et ledit corps tubulaire (3) comprenant de manière correspondante une seule paire de sections de corps longitudinales (3a) disposées à des extrémités opposées d'un second diamètre de la section transversale dudit corps tubulaire, ledit second diamètre étant sensiblement perpendiculaire audit premier diamètre.

3. - Cheville à expansion (1) selon la revendication 1 ou 2, dans laquelle ladite première résistance à la déformation est supérieure à ladite seconde résistance à la déformation.

4. - Cheville à expansion (1) selon la revendication 3, dans laquelle une ou plusieurs zones d'affaiblissement (17) sont prévues dans chacune desdites sections de corps longitudinales (3a).

5. - Cheville à expansion (1) selon la revendication 3 ou 4, dans laquelle une ou plusieurs zones d'affaiblissement supplémentaires sont prévues dans chacun desdits inserts longitudinaux (11).

6. - Cheville à expansion (1) selon la revendication 1 ou 2, dans laquelle ladite seconde résistance à la déformation est supérieure à ladite première résistance à la déformation.

7. - Cheville à expansion (1) selon la revendication 6, dans laquelle une ou plusieurs zones d'affaiblissement (17) sont prévues dans chacun desdits inserts longitudinaux (11).

8. - Cheville à expansion (1) selon la revendication 6 ou 7, dans laquelle une ou plusieurs zones d'affaiblissement supplémentaires sont prévues dans chacune des sections de corps longitudinales (3a).

9. - Cheville à expansion (1) selon l'une quelconque des revendications 4, 5, 7 ou 8, dans laquelle lesdites zones d'affaiblissement et/ou lesdites zones d'affaiblissement supplémentaires sont réalisées sous forme de trous traversants (17).

10. - Cheville à expansion (1) selon l'une quelconque des revendications 4, 5, 7 ou 8, dans laquelle lesdites zones d'affaiblissement et/ou lesdites zones d'affaiblissement supplémentaires sont réalisées sous la forme de réductions d'épaisseur localisées.
